# NEUE EUROPÄISCHE PATENTSCHRIFT

(11) **EP 3 221 068 B2**
(45) Veröffentlichungstag und Bekanntmachung des Hinweises auf die Entscheidung über den Einspruch: **12.06.2024**
(45) Hinweis auf die Patenterteilung: 14.04.2021
(21) Anmeldenummer: 15794913.2
(22) Anmeldetag: 13.11.2015
(51) Int. Cl.: B21D 22/16, B21D 53/10

(54) **VERFAHREN ZUR HERSTELLUNG EINES ROTATIONSSYMMETRISCHEN FORMKÖRPERS**
METHOD FOR MANUFACTURING A ROTATIONALLY SYMMETRICAL SHAPED ARTICLE
PROCÉDÉ DE FABRICATION D'UN ÉLÉMENT MOULÉ À SYMÉTRIE DE RÉVOLUTION

(30) Priorität: 17.11.2014 DE 102014116786
(43) Veröffentlichungstag der Anmeldung: 27.09.2017
(73) Patentinhaber: WF Maschinenbau- und Blechformtechnik GmbH & Co. KG, 48324 Sendenhorst (DE); ThyssenKrupp Steel Europe AG, 47166 Duisburg (DE)
(72) Erfinder: OHLSCHER, Heiko, 48324 Sendenhorst (DE); GÖVERT, Michael, 44139 Dortmund (DE)
(74) Vertreter: Specht, Peter
(86) Internationale Anmeldenummer: PCT/EP2015/076587
(87) Internationale Veröffentlichungsnummer: WO 2016/079024

(56) Entgegenhaltungen:
- EP-A1- 0 824 049
- EP-A1- 2 653 244
- EP-A1- 2 653 244
- EP-A2- 1 108 483
- EP-A2- 1 136 150
- DE-A1- 10 033 244
- DE-A1- 10 121 546
- DE-A1- 19 701 565
- DE-A1- 19 801 491
- DE-A1-102007 023 972
- DE-A1-102007 054 754
- DE-B3-102013 101 555
- US-A- 5 970 776
- US-A1- 2001 035 036
- US-A1- 2001 039 864

## Beschreibung

Die Erfindung betrifft ein Verfahren zur Herstellung eines rotationssymmetrischen Formkörpers nach dem Oberbegriff des Anspruchs 1.

Derartige Formkörper finden in unterschiedlichsten Bereichen Verwendung. Exemplarisch sei hier die Herstellung eines Achs- oder Gelenkzapfens genannt, wie er beispielsweise in der DE 10 2013 101 555 B3 offenbart ist.

Die Herstellung des daraus bekannten aus Metall, insbesondere Stahl bestehenden Formkörpers, der neben einer angeformten Nabe ein glockenförmiges, mit einer innenseitigen Konturierung versehenes Unterteil aufweist, erfolgt bevorzugt unter Einsatz eines Rohres als Halbzeug, wobei die ausgebildete Nabe in ihrem äußeren Ende durch Verformen verschlossen wird, so dass der Formkörper in seiner Endkonfiguration als einseitig offenes Bauteil vorliegt.

Zwar wird in der genannten Literatur der Einsatz einer Ronde als Halbzeug erwähnt, jedoch sind weitere Angaben dazu nicht entnehmbar.

Allerdings sind Einsatzfälle für einen solchen Achs- oder Gelenkzapfen vorgesehen, bei dem die Nabe beispielsweise mit einer Innenverzahnung versehen sein muss, in die ein von außen einführbares Korrespondenzteil eingreift. Dabei soll der Innenraum des Formkörpers lediglich auf der der Nabe gegenüberliegenden Seite offen sein, im Übrigen jedoch geschlossen, um ein Depot für Fett zu bilden, das zum Betrieb von Wälzkörpern dient, die in Funktion des Formteiles im Innenraum positioniert sind.

Um einen solchen Achszapfen bereitzustellen, der also ein einseitig offenes glockenförmiges Unterteil und eine nach außen hin offene, sich an das Unterteil anschließende Nabe aufweist, erfolgt bislang die entsprechende Ausbildung der Nabe ebenso wie die des Unterteiles durch Schmieden und nachfolgendes spanendes Bearbeiten der Nabe, um eine Innenbohrung einzubringen.

Diese Art der Fertigung ist jedoch nur mit einem hohen Aufwand zu betreiben, aus dem sich inakzeptable Fertigungskosten ergeben, die vor allem deshalb beklagenswert sind, als derartige Formteile als Serienprodukte in großen Stückzahlen Verwendung finden.

Darüber hinaus fordert das Schmieden zu einem solchen Formteil einen hohen Materialeinsatz, der zum einen gleichfalls die Herstellungskosten nachteilig beeinflusst, und zum anderen, insbesondere bei Gelenk- oder Achszapfen, die in Kraftfahrzeugen eingesetzt werden, kontraproduktiv zu einer stets geforderten Gewichtsreduzierung, d.h., -optimierung ist.

Ein gattungsgemäßes Verfahren ist aus der US 2001/035036 A1 bekannt.

In der EP 2 653 244 A1 ist ebenfalls ein Verfahren zur Herstellung eines rotationssymmetrischen Formkörpers thematisiert, der durch Umformen einer Ronde eine einseitig geschlossene, zylinderförmige Nabe aufweist. Bei einer Variante sind durch Umformen mittels Drückrollen zylindrische Formabschnitte hergestellt, wobei die angeformte Nabe auf der dem zylindrischen Formabschnitt abgewandten Seite geschlossen ist, so dass sich insgesamt eine Sackbohrung ergibt, die sich axial durch die zylindrischen Formabschnitte und die Nabe erstreckt.

Aus der DE 101 21 546 A1 ist ein Verfahren entnehmbar, bei dem aus einer Ronde ein Getriebeteil mit einer Nabe durch Drücken mittels einer Drückrolle sowie ein die Nabe umhüllender, zylindrischer Zahnkranz geformt wird. Entgegen der Gattung weist die Nabe kein Sackloch auf, sondern eine Durchgangsbohrung.

Der Erfindung liegt die Aufgabe zugrunde, ein Verfahren der gattungsgemäßen Art so weiterzuentwickeln, dass eine fertigungs- und materialoptimierte Herstellung des rotationssymmetrischen Formkörpers möglich ist.

Diese Aufgabe wird durch ein Verfahren mit den Merkmalen des Anspruchs 1 gelöst.

Wie sich überraschend gezeigt hat, kann durch an sich bekanntes Drückwalzen mittels einer Drückrolle unter erfindungsgemäßem Einsatz einer geschlossenen metallischen Ronde, d. h. einer Ronde ohne ein Mittelloch, ein rotationssymmetrischer Formkörper hergestellt werden, der zu unterschiedlich konfigurierten Endprodukten weiterbearbeitet werden kann. Da kein Mittelloch vorhanden ist, wird innerhalb der Nabe vorteilhaft und einfach ein Sackloch ausgebildet, was vorteilhaft ist, wenn der Bereich innerhalb der Nabe geschlossen ausgebildet ist, beispielsweise, wenn ein Fettdepot gebildet werden soll.

Das Ausgangsprodukt für die weitere Bearbeitung ist dabei der nach dem vorstehend beschriebenen Verfahren hergestellte rotationssymmetrische Formkörper, der in einfachster Gestaltung aus einem radial sich erstreckenden beidseitig planebenen Flansch sowie einer sich daran anschließenden, als Hohlzylinder mit geschlossenem Boden und zur dem Flansch abgewandten Seite hin offenen Nabe vorliegt.

Eine spanende Bearbeitung zur Herstellung dieser Nabe ist somit nicht mehr erforderlich, woraus sich nicht nur die erwähnten fertigungstechnischen Vorteile ergeben, sondern auch solche hinsichtlich der Belastbarkeit. Dies insbesondere aufgrund der fehlenden Kerbwirkung durch den beim Umformen im Sinne der Erfindung ununterbrochenen Faserverlauf.

Nach einem weiteren Gedanken der Erfindung ist vorgesehen, die Nabe mit einer Innen- und/oder Außenverzahnung zu versehen, wobei dies gleichfalls spanlos erfolgt und zwar bevorzugt während der Nabenausformung. Hierzu ist der Vorsetzer mit einer außenseitigen entsprechenden Profilierung versehen, während zur Formung einer Außenverzahnung ein außenseitig an die geformte Nabe angreifendes, gleichfalls mit einer entsprechenden Profilierung ausgestattetes Werkzeug vorgesehen ist. Im Übrigen wird der Vorsetzer mit der gleichen Umdrehung angetrieben wie die rotierende Ronde.

Wie sich überraschend gezeigt hat, gestaltet sich die Ausbildung der Nabe besonders einfach, wenn die Ronde vor oder während der Anformung der Nabe auf eine Temperatur von etwa 400° - 1200°C erwärmt.

In einem folgenden Arbeitsschritt kann der sich an die Nabe anschließende radiale Flansch der Ronde bzw. des gebildeten Formteils zu einem glockenförmigen Unterteil geformt werden, wobei eine beispielhafte und bevorzugte Konfiguration der eingangs genannten DE 10 2013 101 555 B3 entnehmbar ist. Der Boden des Sacklochs liegt vorzugsweise zwischen der Nabe und dem glockenförmigen Unterteil.

Bevorzugt erfolgt diese Umformung gleichfalls nach einer Erwärmung, vorzugsweise in einem Temperaturbereich unterhalb einer Härtetemperatur.

Die Ausformung des glockenförmigen Unterteils kann durch Pressen mittels eines geeigneten Presswerkzeuges erfolgen oder durch Drücken mit Hilfe einer rotierenden Drückrolle im Zusammenwirken mit einem Konturdorn.

Bei einer spanlosen Bearbeitung des Formkörpers hin zu einem Achs- oder Gelenkzapfen, dessen glockenförmiges Unterteil Käfig- und Kugelbahnen aufweist, wird das als Rohling vorliegende glockenförmige Unterteil in den Bereichen partiell vorzugsweise auf erwärmt, die bei der folgenden Formgebung durch Drücken gegen den Konturdorn zu den Käfigbahnen herausgebildet werden. Dieses Erwärmen kann vorzugsweise auch auf eine Temperatur zwischen etwa 400° C und 1200° C erfolgen.

Die Ausprägung der Käfigbahnen erfolgt gemäß einer Weiterbildung der Erfindung mittels gegenläufig linear bewegten Prägebalken, zwischen denen der Formkörper als Rohling dieses Verfahrensschrittes auf dem Konturdorn positioniert ist, wobei der Konturdorn einerseits und die Prägebalken andererseits jeweils mit einer Profilierung versehen sind, die insoweit miteinander korrespondieren, als sich die Kontur der Käfigbahn ausbildet.

Dabei können gleichzeitig mit der Ausbildung die Käfigbahnen durch Presshärten gehärtet werden, wobei ein weiterer Vorteil dieses Verfahrensschritts darin liegt, die Käfigbahnen bereits maßlich auf ein Sollmaß zu bringen oder mit Aufmaß, wenn eine beispielsweise Hartbearbeitung nachträglich erfolgen soll.

Auch die für den bestimmungsgemäßen Einsatz des Gelenkzapfens notwendigen Kugelbahnen werden mittels der Prägebalken ebenfalls ausgeformt und gegebenenfalls nachgehärtet.

Weitere vorteilhafte Ausbildungen der Erfindung sind in den Unteransprüchen gekennzeichnet.

Das erfindungsgemäße Verfahren wird nachfolgend anhand der beigefügten Zeichnungen nochmals näher erläutert.

Es zeigen:
- Figur 1: eine Vorrichtung zur Durchführung des Verfahrens in einer geschnittenen schematischen Seitenansicht
- Figur 2: den in einem weiteren Verfahrensschritt zu einem Rohling geformten Formkörper in perspektivischer Ansicht
- Figur 3: den Formkörper nach Fig. 2 in einem Längsschnitt
- Figuren 4 und 5: eine Vorrichtung zur Weiterbearbeitung des Rohlings nach Fig. 2 in verschiedenen Ansichten
- Figur 6: einen hinsichtlich seiner Formgebung komplettierten Formkörper in einer perspektivischen Ansicht.

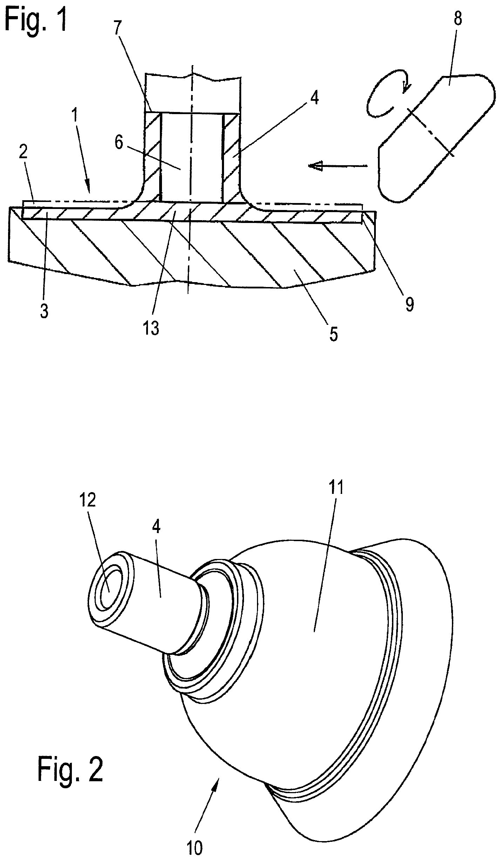

In der Figur 1 ist das Verfahren nach der Erfindung veranschaulicht, mit dem ein rotationssymmetrischer, eine konzentrische Nabe 4 aufweisender Formkörper 1 durch Umformen hergestellt wird, wobei die sich axial erstreckende Nabe 4 einseitig geschlossen ist.

Hierzu wird eine strichpunktiert angedeutete, geschlossene und hier in bevorzugter Ausgestaltung planebene Ronde 2 bereitgestellt. Diese wird sodann in ein Werkzeug 5 eingelegt, das umfänglich ein Widerlagerfutter 9 aufweist, an dem sich die Ronde 2 mit ihrem außenseitigen Rand während des nachfolgenden Verfahrens abstützen kann und dann abstützt.

Auf der dem Werkzeug 5 abgewandten Seite steht ein Vorsetzer 6 auf der Ronde 2 auf, der mit Abstand eine Anschlagschulter 7 aufweist.

Die Ronde 2 wird sodann in Drehung versetzt. Zur Ausbildung der Nabe greift in einem Verfahrensschritt an die rotierende Ronde 2 vom äußeren Rand her unter radialer Zustellung eine drehbare Drückrolle 8 an, mit der unter Dickenreduzierung der Ronde 2 - in dem von der Drückrolle 8 überfahrenen Bereich - das Material vorzugsweise unter radialer Bewegung der Drückkrolle 8 von außen nach innen gedrückt wird. Die Drückrolle 8 taucht vorzugsweise zunächst nach nahe zum äußeren Rand der Ronde 2 axial in die Ronde 2 ein und wird dann/dabei radial nach innen bewegt. Beim ersten Eintauchen weitet sich die Ronde 2 vorzugsweise etwas auf und legt sich an das Widerlagerfutter 9 an.

Das Material wird dabei sodann gegen den Vorsetzer 6 unter Ausbildung der Nabe 4 gedrückt. Dabei wird die Ronde 2 bereichsweise in ihrer Dicke reduziert, wodurch sich in diesem Bereich ein sich radial erstreckender, in Volllinie dargestellter, Flansch 3 ergibt. Das verwendete Material ist ein Metall.

Das an den Vorsetzer 6 gedrückte Material wird bis zur Anschlagschulter 7 geführt bzw. fließt bis dort, so dass die Anschlagschulter 7 damit eine Längenbegrenzung für die Nabe 4 bildet.

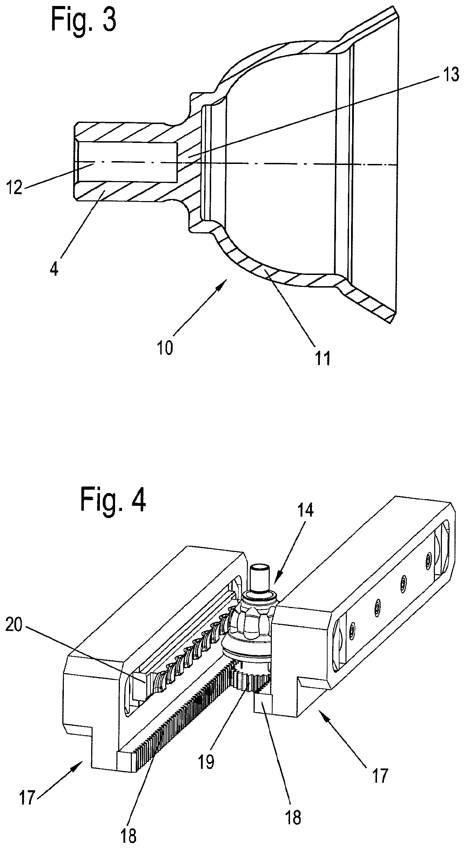

Durch die durchgehend geschlossene Ronde 2 bildet sich bei der Ausformung der Nabe 4 ein Sackloch 12 mit einem geschlossenen Boden 13 aus (Figur 3). Das Sackloch 12 ist innerhalb der Nabe 4 ausgebildet. Der Boden 13, welcher die Nabe 4 axial einseitig verschließt, so dass sich das Sackloch 12 bildet, erstreckt sich radial von der Nabe radial nach innen. An dem vom Flansch 3 und Boden 13 des Sackloches 12 abgewandten Ende ist die Nabe 4 offen.

In einem folgenden Verfahrensschritt wird aus dem Flansch 3 ein Rohling 10 mit einem glockenförmigen Unterteil 11 geformt. Der Rohling 10 weist zudem die Nabe 4 auf. Dazu kann vorzugsweise ein nicht dargestellter, jedoch in der DE 10 2013 101 555 B3 beschriebener Konturdorn verwendet werden. An diesen wird der Flansch angeformt bzw. gelegt, z.B. mittels einer oder mehreren Drückwalzen im Drückumformverfahren oder mittels einer Presse in einem Pressverfahren.

Der derart ausgebildete Rohling 10 ist in den Figuren 2 und 3 abgebildet. Vor allem in der Figur 3 ist deutlich zu erkennen, dass der Boden 13 das Sackloch 12 zum glockenförmigen Unterteil 11 hin verschließt. Dies ist besonders vorteilhaft. Die Figuren 2 und 3 zeigen damit eine beispielhafte und bevorzugte Glockenform. Auf der einen Seite des Bodens 13 erstreckt sich das glockenförmige Unterteil 11. Auf der anderen Seite des Bodens 13 erstreckt sich axial die Nabe 4. Nabe 4 und glockenförmiges Unterteil 11 werden sozusagen durch en Boden 13 voneinander getrennt

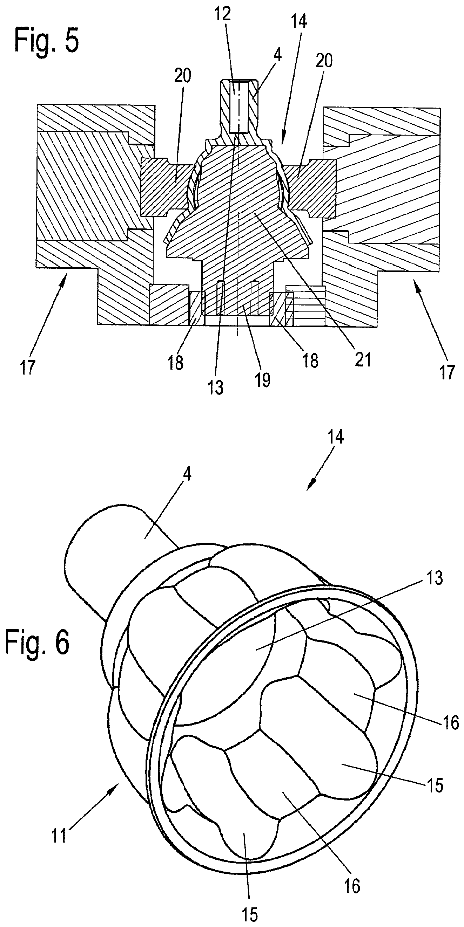

In der Figur 6 ist als ein fertiges Endprodukt ein Gelenkzapfen abgebildet, mit einer inneren Konturierung, bestehend aus im Beispiel sechs Kugelbahnen 15 und dazu benachbarten Käfigbahnen 16, wobei die Kugelbahnen 15 der Aufnahme von Wälzkugeln dienen, während die Käfigbahnen 16 eine formschlüssige Halterung der Wälzkugeln bilden.

Zur Ausbildung der Kugelbahnen 15 und der Käfigbahnen 16 an der Innenseite des glockenförmigen Unterteils 11 sind, entsprechend den Darstellungen in den Figuren 4 und 5, gegenläufig parallel linear verfahrbare Prägebalken 17 vorgesehen, mit auf ihren einander zugewandten Seiten angeordneten Formleisten 20. Mittels dieser Formleisten 20 werden in einem weiteren Verfahrensschritt an den auf einen Formkern 21 aufgesetzten Rohling 10 mit der Nabe 4 und dem glockenförmigen Unterteil 11 die Kugelbahnen 15 und die Käfigbahnen 16 angeformt. Dabei bilden die Formleisten 20, bezogen auf die Innenkonturierung des glockenförmigen Unterteils 11, jeweils eine Matrize und der Formkern 21 eine Patrize bilden. Der Formkern 21 wird dabei mit dem Rohling 10 gedreht. Die Formleisten werden tangential an dem Rohling 10 bewegt, so dass sich die Kugelbahnen 15 und die Käfigbahnen 16 ausbilden.

Dabei liegt der Rohling 10 mit seinem glockenförmigen Unterteil 11 zwischen den Formleisten 20, die bei ihrer Bewegung gegen das glockenförmige Unterteil 11 gepresst werden, so dass sich die Innenkontur mit den Kugel- und Käfigbahnen 15, 16 herausbilden.

Für eine synchrone Verstellung der beiden Prägebalken 17 weisen diese jeweils auf ihren einander zugewandten Seiten hier eine Zahnstange 18 auf, die mit einem Zahnrad 19 des Formkerns 21 kämmen, wobei der Rohling 10 drehfest auf dem Formkern 21 gehalten ist.

Bereits bei der Herstellung des Formkörpers 1 kann in die Nabe 4 eine Innenverzahnung eingebracht sein, wobei die Zähne sich in Achsrichtung der Nabe 4 erstrecken. Hierzu ist dann eine entsprechende Formgebung des Vorsetzers 6 erforderlich, der im Übrigen gemeinsam mit der Ronde 2 rotiert.

Auch in die äußere Mantelfläche der Nabe 4 kann eine Verzahnung eingebracht werden, wobei sowohl die Innen- wie auch die Außenverzahnung, bei entsprechender Ausgestaltung der Prägebalken 17, auch beim Ausformen der Innenkontur des glockenförmigen Unterteils 11 eingebracht werden kann.

Anzumerken ist, dass die einzelnen Verfahrensschritte auf einer Vorrichtung ausgeführt werden können, die eine einzige Maschine aufweist, die für die verschiedenen aufeinander folgenden Verfahrensschritte umgerüstet wird oder auf einer Vorrichtung mit mehreren nebeneinander angeordneten Maschinen, auf denen die einzelnen Verfahrensschritte ausgeführt werden.

### Bezugszeichenliste

- 1: Formkörper
- 2: Ronde
- 3: Flansch
- 4: Nabe
- 5: Werkzeug
- 6: Vorsetzer
- 7: Anschlagschulter
- 8: Drückrolle
- 9: Widerlagerfutter
- 10: Rohling
- 11: Unterteil
- 12: Sackloch
- 13: Boden
- 14: Gelenkzapfen
- 15: Kugelbahn
- 16: Käfigbahn
- 17: Prägebalken
- 18: Zahnstange
- 19: Zahnrad
- 20: Formleiste
- 21: Formkern

## Patentansprüche

1. Verfahren zur Herstellung eines eine durch Umformen hergestellte, axial einseitig geschlossene, zylinderförmig ausgebildete konzentrische Nabe (4) aufweisenden rotationssymmetrischen Formkörpers (1), wobei an eine rotierende, geschlossene und vorzugsweise planebene Ronde (2) aus Blech mindestens eine Drückrolle (8) angreift, mit der unter Dickenreduzierung der Ronde (2) das Material radial von außen nach innen unter Ausformung der Nabe (4), mit einem Sackloch (12), gegen einen auf der Ronde (2) aufstehenden Vorsetzer (6) gedrückt wird, **dadurch gekennzeichnet, dass** aus einem sich radial an die Nabe (4) anschließenden Flansch (3) ein Rohling (10) in Form eines glockenförmigen Unterteils (11) durch Drücken oder Pressen gebildet wird und das Sackloch (12) einen Boden (13) aufweist, der zwischen der Nabe (4) und dem glockenförmigen Unterteil (11) liegt, wobei sich auf der einen Seite des Bodens (13) das glockenförmige Unterteil (11) und auf der anderen Seite des Bodens (13) die Nabe (4) axial erstreckt, wobei das glockenförmige Unterteil (11) mit einer Innenkontur, bestehend aus Kugelbahnen (15) zur Aufnahme von Wälzkörpern und dazu benachbarten Käfigbahnen (16) durch spanloses Anformen versehen wird und die Kugelbahnen (15) nach ihrer Ausformung gehärtet werden.

2. Verfahren nach Anspruch 1, **dadurch gekennzeichnet, dass** die Ronde (2) vor oder während der Ausformung der Nabe erwärmt wird, vorzugsweise auf eine Temperatur von etwa 400° - 1200°C.

3. Verfahren nach einem der vorstehenden Ansprüche, **dadurch gekennzeichnet, dass** die Nabe (4) mit einer Innen- und/oder Außenverzahnung versehen wird, wobei sich die Zähne jeweils in Achsrichtung der Nabe (4) erstrecken.

4. Verfahren nach einem der vorstehenden Ansprüche, **dadurch gekennzeichnet, dass** die Kugelbahnen (15) und die Käfigbahnen (16) mittels parallel linear und gegenläufig bewegbaren Formleisten (20) in Korrespondenz mit einem den Rohling (10) verdrehsicher haltenden Formkern (21), unter Bildung eines Gelenkzapfens (14) ausgeformt werden.

5. Verfahren nach einem der vorstehenden Ansprüche, **dadurch gekennzeichnet, dass** zumindest der sich an die Nabe (4) anschließende Randbereich des Flansches (3) vor oder während der Anformung des glockenförmigen Unterteils (11) erwärmt wird, vorzugsweise unter Härtetemperatur.

6. Verfahren nach einem der vorstehenden Ansprüche, **dadurch gekennzeichnet, dass** das glockenförmige Unterteil (11) vor oder während der Ausformung der Käfigbahn (16) in deren auszubildenden Bereich auf Härtetemperatur erwärmt wird.

7. Verfahren nach einem der vorstehenden Ansprüche, **dadurch gekennzeichnet, dass** die Formleisten (20) an den Rohling (10) angepresst werden.

8. Verfahren nach einem der vorstehenden Ansprüche, **dadurch gekennzeichnet, dass** die Innen- und/oder Außenverzahnung beim Formen der Nabe (4) ausgeformt wird.

9. Verfahren nach einem der vorstehenden Ansprüche, **dadurch gekennzeichnet, dass** das Sackloch (12) axial innerhalb der Nabe (4) ausgebildet wird.

## Claims

1. A method for manufacturing a rotationally symmetrical shaped article (1) having a concentric hub (4) which is produced by a forming process, closed axially on one side and formed in a cylindrical manner, wherein at least one spinning roller (8) acts on a rotating, closed and preferably planar circular blank (2) made of sheet metal, with which the material, by reducing the thickness of the circular blank (2), is pressed against a projecting part (6) standing upright against the circular blank (2) radially from the outside to the inside by forming the hub (4), with a blind hole (12), **characterized in that** from a flange (3) that radially adjoins the hub (4) a blank (10) in form of a bell-shaped bottom part (11) is formed by spinning or pressing and that the blind hole (12) comprises a base (13) which lies between the hub (4) and the bell-shaped part (11), wherein the bell-shaped bottom part (11) extends axially on one side of the base (13) and the hub (4) extends axially on the other side of the base (13), wherein the bell-shaped bottom part (11) is provided by a non-cutting forming process with an inner contour, consisting of ball tracks (15) for accommodating rolling bodies and cage tracks (16) that are adjacent thereto and the ball tracks (15) are hardened after their formation.

2. A method according to claim 1, **characterized in that** the circular blank (2) is heated before or during the forming of the hub, preferably to a temperature of approximately 400°C to 1200°C.

3. A method according to one of the preceding claims, **characterized in that** the hub (4) is provided with an inner and/or outer toothing, wherein the teeth respectively extend in the axial direction of the hub (4).

4. A method according to one of the preceding claims, **characterized in that** the ball tracks (15) and the cage tracks (16) are formed by means of shaping strips (20), which are movable linearly in parallel and against each other, in correspondence with a mould core (21) which holds the circular blank (10) in a twist-proof manner, under formation of a pivot pin (14).

5. A method according to one of the preceding claims, **characterized in that** at least the edge region of the flange (3) adjoining the hub (4) is heated before or during the forming of the bell-shaped bottom part (11), preferably under hardening temperature.

6. A method according to one of the preceding claims, **characterized in that** the bell-shaped bottom part (11) is heated to the hardening temperature before or during the forming of the cage track (16) in its region to be formed.

7. A method according to one of the preceding claims, **characterized in that** the shaping strips (20) are pressed against the circular blank (10).

8. A method according to one of the preceding claims, **characterized in that** the inner and/or outer toothing is shaped during forming of the hub (4).

9. A method according to one of the preceding claims, **characterized in that** the blind hole (12) is formed axially within the hub (4).

## Revendications

1. Procédé de fabrication d'un élément moulé (1) à symétrie de révolution présentant un moyeu (4) concentrique de forme cylindrique obtenu par formage, fermé d'un côté dans le sens axial, dans lequel au moins un rouleau presseur (8) se met en prise sur un flan (2) de tôle en rotation, fermé et de préférence plan, et refoule le matériau dans le sens radial de l'extérieur vers l'intérieur contre un appui (6) posé sur le flan (2) en réduisant l'épaisseur du flan (2) pour former le moyeu (4) muni d'un trou borgne (12), **caractérisé en ce qu'**une ébauche (10) formant une partie inférieure (11) en forme de cloche est formée par pression ou pressage à partir d'une bride (3) qui fait suite au moyeu (4) dans le sens radial et le trou borgne (12) présente un fond (13) qui se trouve entre le moyeu (4) et la partie inférieure en forme de cloche (11), la partie inférieure en forme de cloche (11) s'étendant dans le sens axial sur un côté du fond (13) et le moyeu (4) sur l'autre côté du fond (13), dont la partie inférieure en forme de cloche (11) est munie, par mise en forme sans enlèvement de matière, d'un contour intérieur composé de pistes pour billes (15) destinées à recevoir des éléments de roulement et de pistes de cage (16) voisines et les pistes pour billes (15) sont trempées après leur formage.

2. Procédé selon la revendication 1, **caractérisé en ce que** le flan (2) est chauffé avant ou pendant le formage du moyeu, de préférence à une température d'environ 400 à 1200 °C.

3. Procédé selon l'une des revendications précédentes, **caractérisé en ce que** le moyeu (4) est muni d'une denture interne et/ou externe, dont les dents s'étendent chacune dans le sens de l'axe du moyeu (4).

4. Procédé selon l'une des revendications précédentes, **caractérisé en ce que** les pistes pour billes (15) et les pistes de cage (16) sont formées au moyen de barres de formage (20) mobiles parallèlement de façon linéaire et en sens opposé en correspondance avec un noyau de moule (21) qui retient l'ébauche (10) de façon stable en rotation en formant un pivot d'articulation (14).

5. Procédé selon l'une des revendications précédentes, **caractérisé en ce qu'**au moins le bord de la bride (3) se raccordant au moyeu (4) est chauffé avant ou pendant la mise en forme de la partie inférieure en forme de cloche (11), de préférence en dessous de la température de trempe.

6. Procédé selon l'une des revendications précédentes, **caractérisé en ce que** la partie inférieure en forme de cloche (11) est chauffée à la température de trempe avant ou pendant le formage de la piste de cage (16) dans la région à former de celle-ci.

7. Procédé selon l'une des revendications précédentes, **caractérisé en ce que** les barres de formage (20) sont pressées sur l'ébauche (10).

8. Procédé selon l'une des revendications précédentes, **caractérisé en ce que** la denture interne ou externe est formée lors du formage du moyeu (4).

9. Procédé selon l'une des revendications précédentes, **caractérisé en ce que** le trou borgne (12) est formé à l'intérieur du moyeu (4) dans le sens axial.
